# EUROPÄISCHE PATENTSCHRIFT

(11) **EP 2 981 680 B1**
(45) Veröffentlichungstag und Bekanntmachung des Hinweises auf die Patenterteilung: **01.03.2017**
(21) Anmeldenummer: 14735454.2
(22) Anmeldetag: 02.04.2014
(51) Int. Cl.: F01D 11/00, F02C 7/28, F16J 15/3252, F16J 15/3288, B22F 3/105, F01D 11/08, F01D 11/02

(54) **VORRICHTUNG UND VERFAHREN ZUR BEFESTIGUNG VON DICHTUNGSELEMENTEN**
APPARATUS AND METHOD FOR SECURING SEALING ELEMENTS
DISPOSITIF ET PROCEDE POUR FIXER DES ELEMENTS D'ETANCHEITE

(30) Priorität: 04.04.2013 DE 102013205922
(43) Veröffentlichungstag der Anmeldung: 10.02.2016
(73) Patentinhaber: MTU Aero Engines AG, 80995 München (DE)
(72) Erfinder: CERNAY, Christoph, 83052 Bruckmühl (DE); SCHMIDMAYR, Wolfgang, 80539 München (DE); HESS, Thomas, 81541München (DE); WEBER, Julian, 80797 München (DE)
(86) Internationale Anmeldenummer: PCT/DE2014/000174
(87) Internationale Veröffentlichungsnummer: WO 2014/161527

(56) Entgegenhaltungen:
- EP-A1- 1 890 056
- WO-A1-03/056216
- WO-A2-97/12125
- DE-A1-102010 021 923

## Beschreibung

Die Erfindung betrifft eine Vorrichtung und ein Verfahren zur Befestigung von Dichtungselementen in einer Ausnehmung, insbesondere in einer in einer Strömungsmaschine ausgebildeten Einbaunut, mit mindestens einem Dichtungsträgerelement umfassend mindestens ein Dichtungselement. Die Erfindung betrifft zudem ein Verfahren zur Herstellung einer entsprechenden Vorrichtung.

Derartige Dichtungselemente oder -systeme kommen insbesondere bei sogenannten Spalterhaltungssystemen in Verdichter- und Turbinenkomponenten von Strömungsmaschinen zur Anwendung. Dabei haben derartige Dichtungssysteme die Aufgabe, einen Dichtspalt eines rotierenden Bauteils, z. B. einer Beschaufelung zu einem feststehenden Bauteil, z. B. einem Gehäuse der Strömungsmaschine minimal zu halten und damit ein stabiles Betriebsverhalten bei hohem Wirkungsgrad zu garantieren. Bei den genannten Dichtungssystemen kann es sich im sogenannte Bürstendichtungen oder Labyrinthdichtungen handeln. Dabei werden z. B. zur Befestigung von Einbaublechen für Bürstendichtungen in der Regel Ausnehmungen bzw. Einbaunuten in dem betreffenden Bauteil mit Hinterschnitt benötigt. Die verwendeten Gehäusebleche werden in diese Einbaunuten mit Hinterschnitt eingestemmt und durch eine entsprechende Verformung der Gehäusebleche in der Einbaunut fixiert. Zur Befestigung von Labyrinthdichtungen in U-förmigen Einbaunuten werden üblicherweise Einstemmdrähte verwendet. Nachteilig an den bekannten Vorrichtungen und Verfahren zur Befestigung von Dichtungselementen in einer Ausnehmung ist jedoch, dass diese sehr aufwändig gestaltet und dadurch zeitintensiv in ihrem Einbau sind. Zudem werden zusätzliche Elemente wie z. B. die genannten Einstemmdrähte benötigt.

Die WO 03/056216 A1 beschreibt eine Bürstendichtung zum Abdichten relativ zueinander beweglicher Bauteile mit einem Borsten tragenden Dichtungsteil, das mittels einer entsprechend geformten Stützplatte in einer als Borstengehäuse dienenden Nut des die Borstendichtung tragenden Bauteils durch Einpressung kraft- und formschlüssig klemmend derart gehalten ist, dass die freien Enden der Borsten zur Dichtfläche ausgerichtet sind.

Die DE 10 2010 021 923 A1 beschreibt ein Verfahren zum Festlegen eines Bürstendichtelements in einer Nut eines Gehäusesegments für eine thermische Strömungsmaschine, insbesondere für eine Gasturbine. Dabei wird das Bürstendichtelement in einem Aufnahmeraum eines einteiligen Aufnahmeelements festgelegt, das Aufnahmeelement in der Nut des Gehäusesegments angeordnet und die Lage des Aufhahmeelements am Gehäusesegment gesichert.

Die EP 1 890 056 A1 beschreibt eine Bürstendichtung für eine Strömungsmaschine zum Abdichten eines Spaltes zwischen einem rotierenden und einem stehenden Bauteil der Strömungsmaschine, bei der elastisch biegsame Borsten mit einem Endbereich in einem Grundkörper gehalten sind, welcher an einem der Bauteile ortsfest gehaltert ist. Weiterhin ist der Grundkörper von einem Blech an dem Bauteil gehaltert, welches im Querschnitt betrachtet U-förmig gestaltet ist und von dem der Grundkörper an zumindest zwei gegenüberliegenden Seitenflächen umgriffen ist. Aufgabe der vorliegenden Erfindung ist es, eine Vorrichtung und ein Verfahren zur Befestigung von Dichtungselementen in einer Ausnehmung zu schaffen, welche einen vereinfachten und schnellen Einbau der Dichtungselemente gewährleisten. Eine weitere Aufgabe der Erfindung ist es, eine gattungsgemäße Vorrichtung formgenau und kostengünstig herzustellen.

Die Aufgaben werden erfindungsgemäß durch eine Vorrichtung mit den Merkmalen des Patentanspruchs 1, ein Befestigungsverfahren mit den Merkmalen des Patentanspruchs 13 sowie ein Herstellungsverfahren mit den Merkmalen des Patentanspruchs 14 gelöst. Vorteilhafte Ausgestaltungen der Erfindung sind in den jeweiligen Unteransprüchen angegeben, wobei vorteilhafte Ausgestaltungen der Vorrichtung als vorteilhafte Ausgestaltungen des erfindungsgemäßen Befestigungsverfahrens - und umgekehrt - anzusehen sind.

Eine erfindungsgemäße Vorrichtung zur Befestigung von Dichtungselementen in einer Ausnehmung, insbesondere in einer in einer Strömungsmaschine ausgebildeten Einbaunut weist mindestens ein Dichtungsträgerelement umfassend mindestens ein Dichtungselement auf. Dabei ist mindestens ein Fixierkörper zwischen dem Dichtungsträgerelement und einem dem Dichtungsträgerelement zugeordneten Klemmkörper angeordnet, wobei der Fixierkörper mit dem Dichtungsträgerelement und dem Klemmkörper integral über mittels Krafteinwirkung lösbare stegartige Verbindungen verbunden ist. Durch die erfindungsgemäße Ausgestaltung der Vorrichtung zur Befestigung von Dichtungselementen ist ein vereinfachter und schneller Einbau der Dichtungselemente dadurch gegeben, dass auf aufwändige Nuten mit Hinterschnitt sowie zusätzliche Befestigungselemente verzichtet werden kann, da der Fixierkörper in eingestemmten Zustand einen Kraftschluss zwischen der erfindungsgemäßen Vorrichtung und der Ausnehmung bzw. der Seitenwände der Ausnehmung gewährleistet. So ist in einer vorteilhaften Ausgestaltung der erfindungsgemäßen Vorrichtung der Fixierkörper derart ausgebildet, dass bei einem Lösen der Verbindung zwischen dem Fixierkörper und dem Dichtungsträgerelement einerseits und zwischen dem Klemmkörper und dem Fixierkörper andererseits ein Kraftschluss zwischen dem Fixierkörper, dem Dichtungsträgerelement, dem Klemmkörper und Seitenwänden der Ausnehmung erfolgt. Dadurch ist eine sichere Befestigung der erfindungsgemäßen Vorrichtung in der Einbaunut bzw. der Ausnehmung durch Kraftschluss gewährleistet. Zudem ist die Befestigung der erfindungsgemäßen Vorrichtung durch ein einfaches Einstemmen des Fixierkörpers und dem daraus folgenden Kraftschluss möglich.

In weiteren vorteilhaften Ausgestaltungen der erfindungsgemäßen Vorrichtung ist das Dichtungsträgerelement als Gehäuse zur Aufnahme des Dichtungselementes ausgebildet. Das Dichtungselement kann dabei als Bürstendichtung ausgebildet sein. Des Weiteren ist es möglich, dass das Dichtungsträgerelement als Basiselement des Dichtungselementes ausgebildet ist, wobei das Dichtungselement eine Labyrinthdichtung mit entsprechenden Labyrinthfinnen ist.

In einer weiteren vorteilhaften Ausgestaltung der erfindungsgemäßen Vorrichtung sind die stegartigen Verbindungen derart ausgebildet, dass sie vom Dichtungsträgerelement und dem entsprechenden gegenüberliegenden Klemmkörper jeweils abstehend unter Ausbildung eines Winkels in Richtung der Ausnehmung bzw. Einbaunut zeigend ausgebildet sind. Nach dem Einstemmen und Loslösen des Fixierkörpers von den stegartigen Verbindungen zur Erzielung des oben erwähnten Kraftschlusses verhindern die schräg gestellten Verbindungsstege ein Zurückrutschen des Fixierkörpers durch die entstehende mechanische Verklammerung aufgrund ihrer Anordnung und Ausbildung. Damit ist wiederum eine sichere Befestigung der Dichtungselemente in der Ausnehmung gewährleistet.

In weiteren vorteilhaften Ausgestaltungen der erfindungsgemäßen Vorrichtung ist ein zwischen dem Dichtungsträgerelement und dem gegenüberliegenden Klemmkörper ausgebildeter Raum zur Aufnahme des Fixierkörpers in Richtung der Ausnehmung sich verjüngend ausgebildet. Durch das Einstemmen eines entsprechend geformten Fixierkörpers werden das Dichtungsträgerelement und der Klemmkörper in unterschiedliche Richtungen voneinander wegbewegt und entsprechend in der Ausnehmung fixiert. Dabei kann zwischen einem in Richtung der Ausnehmung zeigenden Ende des Fixierkörpers und einer Basis der Ausnehmung ein Freiraum ausgebildet sein. Der Abstand zwischen dem Ende des Fixierkörpers und der Basis der Ausnehmung kann zur Definition der Größe des Kraftschlusses zwischen den Einzelelementen der erfindungsgemäßen Vorrichtung vordefiniert werden.

In weiteren vorteilhaften Ausgestaltungen der erfindungsgemäßen Vorrichtung ist der Fixierkörper in Richtung der Ausnehmung sich verjüngend ausgebildet. Dabei kann der Fixierkörper keil- oder stumpfkegelförmig ausgebildet sein. Im Zusammenspiel mit dem zwischen dem Dichtungsträgerelement und dem gegenüberliegenden Klemmkörper ausgebildeten Raum ergibt sich durch diese Form des Fixierkörpers ein sicherer Kraftschluss zwischen den genannten Elementen nach einem Loslösen des Fixierkörpers von den stegartigen Verbindungen und einem Einstemmen in Richtung der Ausnehmung. Aber auch andere Formen für den Fixierkörper sind denkbar. Die Form des Fixierkörpers muss dabei jeweils an den zwischen dem Dichtungsträgerelement und dem gegenüberliegenden Klemmkörper ausgebildeten Raum angepasst sein. Entscheidend dabei ist, dass es nach einem Lösen der Verbindung zwischen dem Fixierkörper und dem Dichtungsträgerelement bzw. dem Klemmkörper zu einem Kraftschluss zwischen dem Fixierkörper, dem Dichtungsträgerelement, dem Klemmkörper und den Seitenwänden der Ausnehmung kommt.

In weiteren vorteilhaften Ausgestaltungen der erfindungsgemäßen Vorrichtung sind der Fixierkörper, das Dichtungsträgerelement, der Klemmkörper sowie die stegartigen Verbindungen einstückig ausgebildet. Insbesondere erfolgt die einstückige bzw. integrale Herstellung der erfindungsgemäßen Vorrichtung mittels eines generativen Herstellungsverfahrens. Zudem ist es möglich, dass der Fixierkörper, das Dichtungsträgerelement, der Klemmkörper, die stegartigen Verbindungen sowie das als Labyrinthdichtung ausgebildete Dichtungselement ebenfalls einstückig ausgebildet sind. Auch hier kann die integrale Herstellung der Vorrichtung mittels eines generativen Herstellungsverfahrens erfolgen.

Die Erfindung betrifft weiterhin ein Verfahren zur Befestigung von Dichtungselementen in einer Ausnehmung, insbesondere in einer in einer Strömungsmaschine ausgebildeten Einbaunut, unter Verwendung einer Vorrichtung wie im Vorhergehenden beschrieben, wobei das Verfahren folgende Schritte umfasst:
a) Einbringen der Vorrichtung in die Ausnehmung;
b) Aufbringen einer Kraft in Richtung der Ausnehmung auf den Fixierkörper, derart, dass ein Lösen der Verbindung zwischen dem Fixierkörper und dem Dichtungsträgerelement einerseits und zwischen dem Klemmkörper und dem Fixierkörper andererseits bewirkt wird; und
c) weiteres Aufbringen der Kraft auf den Fixierkörper, bis ein Kraftschluss zwischen dem Fixierkörper, dem Dichtungsträgerelement, dem Klemmkörper und Seitenwänden der Ausnehmung erfolgt.

Durch dieses Verfahren ist ein einfacher und schneller Einbau der Dichtungselemente in die entsprechende Ausnehmung gewährleistet. Auf zusätzliche Befestigungselemente oder eine spezielle und aufwändige Ausgestaltung der Ausnehmung kann vorteilhafterweise verzichtet werden.

Die Erfindung betrifft weiterhin ein Verfahren zur Herstellung einer erfindungsgemäßen Vorrichtung wie im Vorhergehenden beschrieben. Dabei wird die erfindungsgemäße Vorrichtung mittels eines generativen Herstellungsverfahrens hergestellt. So kann das generative Herstellungsverfahren ein selektives Laserschmelzverfahren oder ein selektives Lasersinterverfahren sein. Auch andere generative Herstellungsverfahren sind denkbar. Durch die Verwendung von generativen Fertigungsverfahren ist ein formgenaues und kostengünstiges Herstellen der erfindungsgemäßen Vorrichtung zur Befestigung von Dichtungselementen möglich.

Dabei zeigt
- Figur 1: eine schematische Schnittdarstellung einer ersten Ausführungsform der erfindungsgemäßen Vorrichtung; und
- Figur 2: eine schematische Schnittdarstellung einer zweiten Ausführungsform der erfindungsgemäßen Vorrichtung.

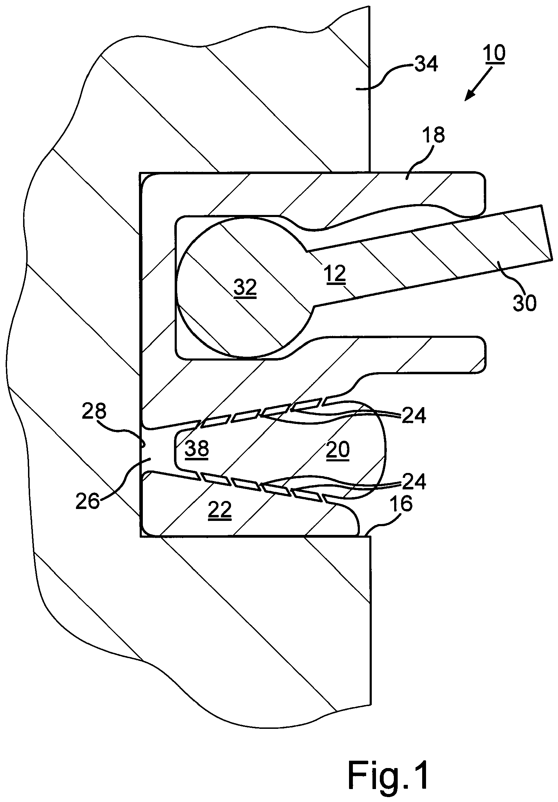

Die in Figur 1 gezeigte erste Ausführungsform einer Vorrichtung 10 zur Befestigung von Dichtungselementen umfasst ein Dichtungsträgerelement 18, einen Fixierkörper 20 und einen dem Dichtungsträgerelement 18 zugeordneten Klemmkörper 22. Der Fixierkörper 20 ist dabei zwischen dem Dichtungsträgerelement 18 und dem Klemmkörper 22 mittels stegartiger Verbindungen 24 fixiert. In dem dargestellten Ausführungsbeispiel ist das Dichtungsträgerelement 18 als Gehäuse zur Aufnahme einer Bürstendichtung ausgebildet. Das als Bürstendichtung ausgebildete Dichtungselement 12 besteht dabei aus einer Vielzahl von schematisch dargestellten Fasern 30, die um eine Einheit 32 bestehend aus einem aus Klemmring und einem Kern der Bürstendichtung gewickelt sind. Das verdickte Ende der Bürstendichtung bzw. der die Einheit 32 ist dabei innerhalb des als Gehäuse ausgebildeten Dichtungsträgerelementes 18 gelagert, wobei die Innenwände des Gehäuses derart ausgeformt sind, dass eine sichere Fixierung der Bürstendichtung in dem Gehäuse gewährleistet ist. Der Aufbau der Bürstendichtung an sich entspricht den bekannten Bürstendichtungen.

Die Vorrichtung 10 ist in einer Ausnehmung 16 angeordnet. Die Ausnehmung 16 ist in dem dargestellten Ausführungsbeispiel eine in einem Bauteil 34 einer Strömungsmaschine ausgebildete Einbaunut. Bei der Strömungsmaschine kann es sich um eine Dampf- oder Gasturbine oder ein Flugzeugtriebwerk, insbesondere einen Verdichter oder eine Turbine eines Flugzeugtriebwerks, handeln.

Des Weiteren erkennt man, dass der Fixierkörper 20 in dem dargestellten Ausführungsbeispiel keilförmig ausgebildet ist, wobei sich der Fixierkörper 20 in Richtung der Ausnehmung 16 bzw. einer Basis 28 der Ausnehmung 16 verjüngt. Entsprechendes gilt für einen zwischen dem Dichtungsträgerelement 18 und dem gegenüberliegenden Klemmkörper 22 ausgebildeten Raum zur Aufnahme des Fixierkörpers 20. Auch dieser ist in Richtung der Ausnehmung 16 sich verjüngend ausgebildet. Durch ein Einstemmen des Fixierkörpers 20 in Richtung der Ausnehmung 16 bzw. der Basis 28 der Ausnehmung 16 der Fixierkörper 20 von den stegartigen Verbindungen 24 durch die entsprechende Krafteinwirkung gelöst wird (nicht dargestellt). Durch das Lösen der Verbindung zwischen dem Fixierkörper 20 und dem Dichtungsträgerelement bzw. dem Klemmkörper 22 entsteht ein Kraftschluss zwischen dem Fixierkörper 20, dem Dichtungsträgerelement 18, dem Klemmkörper 22 und den Seitenwänden der Ausnehmung 16. Der Fixierkörper 20 drückt sowohl das Dichtungsträgerelement 18 wie auch den Klemmkörper 22 gegen die Seitenwände der Ausnehmung 16 und fixiert somit die Vorrichtung 10 innerhalb der Ausnehmung 16. Die stegartigen Verbindungen 24 sind dabei derart ausgebildet, dass sie vom Dichtungsträgerelement 18 und dem gegenüberliegenden Klemmkörper 22 jeweils abstehend unter Ausbildung eines Winkels in Richtung der Ausnehmung 16 bzw. der Basis 28 der Ausnehmung 16 zeigend ausgebildet sind. Durch diese Schrägstellung der Verbindungen 24 ist gewährleistet, dass der Fixierkörper 20 nach dem Lösen von den stegartigen Verbindungen 24 nicht mehr aus der Ausnehmung 16 heraus gleiten kann.

Des Weiteren wird deutlich, dass zwischen einem der Basis 28 der Ausnehmung 16 zugewandten Ende 38 des Fixierkörpers 20 und der Basis 28 der Ausnehmung 16 ein Raum 26 ausgebildet ist. Durch die Beabstandung des Endes 38 von der Basis 28 wird das Einstemmen des Fixierkörpers 20 in Richtung der Einbaunut 16 ermöglicht und auch begrenzt.

Der Fixierkörper 20, das Dichtungsträgerelement 18, der Klemmkörper 22 sowie die stegartigen Verbindungen 24 sind einstückig ausgebildet. Die Ausgestaltung der Vorrichtung 10 ermöglicht es zudem, dass die Bürstendichtung bereits vor dem Einbau des Bürstendichtungsgehäuses in die Ausnehmung 16 in das Gehäuse eingesetzt werden kann.

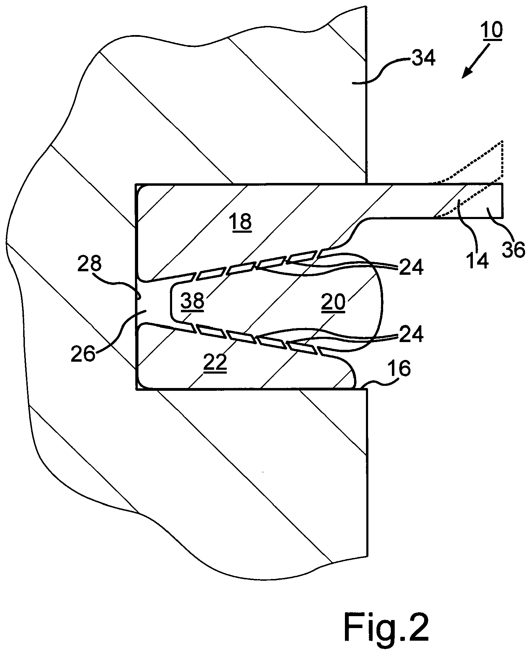

Figur 2 zeigt eine schematische Schnittdarstellung einer zweiten Ausführungsform der Vorrichtung 10. Hierbei ist das Dichtungselement 14 als Labyrinthdichtung mit entsprechenden Labyrinthfinnen 36 ausgebildet. Das Dichtungsträgerelement 18 bildet ein Basiselement des Dichtungselementes 14 bzw. der Labyrinthdichtung. Die Spitzen der Labyrinthfinnen 36 können dabei auch abgewinkelt ausgebildet sein (vgl. gestrichelte Darstellung). Auch bei dem zweiten Ausführungsbeispiel ist zwischen dem Dichtungsträgerelement 18 und dem entsprechenden Klemmkörper 22 der Fixierkörper 20 angeordnet. Der Fixierkörper 20 ist wiederum mit dem Dichtungsträgerelement 18 und dem Klemmkörper 22 integral über die mittels Krafteinwirkung lösbaren stegartigen Verbindungen 24 verbunden. Im Unterschied zu dem in Figur 1 dargestellten ersten Ausführungsbeispiel ist bei dem zweiten Ausführungsbeispiel nicht nur der Fixierkörper 20, das Dichtungsträgerelement 18, der Klemmkörper 22 und die stegartigen Verbindungen 24 integral gefertigt bzw. einstückig ausgebildet, sondern auch das als Labyrinthdichtung ausgebildete Dichtungselement 14. Bezüglich der übrigen Merkmale wird auf die Beschreibung des ersten Ausführungsbeispiels in Figur 1 verwiesen.

Die in den Figuren 1 und 2 gezeigten Vorrichtungen 10 werden mittels eines generativen Herstellungsverfahrens, insbesondere eines selektiven Laserschmelz- oder selektiven Lasersinterverfahrens hergestellt. Dabei wird vorzugsweise ein zweistufiger Prozess wiederholend ausgeführt, wobei in einem ersten Schritt des zweistufigen Prozesses ein gleichmäßiges Pulverbett bereitgestellt wird. In einem zweiten Schritt wird auf Basis von aus einem dreidimensionalen CAD-Modell erzeugten Schichten das Pulver des Pulverbetts selektiv aufgeschweißt und damit verfestigt. Durch die wiederholende Ausführung dieses zweistufigen Prozesses wird die herzustellende Vorrichtung 10 schichtweise und damit sukzessive aufgebaut. Das in dem ersten Schritt bereitgestellte Pulver besteht dabei aus Metall, einer Metall-Legierung, Keramik oder Kunststoff. Auch andere generative Herstellungsverfahren sind verwendbar. Durch die Verwendung von generativen Herstellungsverfahren ergeben sich vorteilhafterweise geometrische Freiheiten bei der Ausgestaltung der Vorrichtung insgesamt und des Dichtungsträgerelementes 18 im besonderen, insbesondere bei der Ausgestaltung von Bürstendichtungsgehäusen oder auch bei der Gestaltung der Finnen der Labyrinthdichtung. Zudem ist es ohne weiters möglich, Variationen in der Materialstärke der einzelnen Elemente der Vorrichtung 10 zu verwirklichen.

## Patentansprüche

1. Vorrichtung zur Befestigung von Dichtungselementen (12, 14) in einer Ausnehmung (16), mit mindestens einem Dichtungsträgerelement (18) umfassend mindestens ein Dichtungselement (12, 14), wobei mindestens ein Fixierkörper (20) zwischen dem Dichtungsträgerelement (18) und einem dem Dichtungsträgerelement (18) zugeordneten Klemmkörper (22) angeordnet ist, **dadurch gekennzeichnet, dass** der Fixierkörper (20) mit dem Dichtungsträgerelement (18) und dem Klemmkörper (22) integral über mittels Krafteinwirkung lösbare stegartige Verbindungen (24) verbunden ist.

2. Vorrichtung nach Anspruch 1, **dadurch gekennzeichnet, dass** der Fixierkörper (20) derart ausgebildet ist, dass bei einem Lösen der Verbindung zwischen dem Fixierkörper (20) und dem Dichtungsträgerelement (18) einerseits und zwischen dem Klemmkörper (22) und dem Fixierkörper (20) andererseits ein Kraftschluss zwischen dem Fixierkörper (20), dem Dichtungsträgerelement (18), dem Klemmkörper (22) und Seitenwänden der Ausnehmung (16) erfolgt.

3. Vorrichtung nach Anspruch 1 oder 2, **dadurch gekennzeichnet, dass** das Dichtungsträgerelement (18) als Gehäuse zur Aufnahme des Dichtungselementes (12) ausgebildet ist.

4. Vorrichtung nach Anspruch 3, **dadurch gekennzeichnet, dass** das Dichtungselement (12) als Bürstendichtung ausgebildet ist.

5. Vorrichtung nach Anspruch 1, **dadurch gekennzeichnet, dass** das Dichtungsträgerelement (18) als Basiselement des Dichtungselementes (14) ausgebildet ist, wobei das Dichtungselement (14) eine Labyrinthdichtung ist.

6. Vorrichtung nach einem der vorhergehenden Ansprüche, **dadurch gekennzeichnet, dass** die stegartigen Verbindungen (24) vom Dichtungsträgerelement (18) und dem entsprechenden gegenüberliegenden Klemmkörper (22) jeweils abstehend unter Ausbildung eines Winkels in Richtung der Ausnehmung (16) zeigend ausgebildet sind.

7. Vorrichtung nach einem der vorhergehenden Ansprüche, **dadurch gekennzeichnet, dass** ein zwischen dem Dichtungsträgerelement (18) und dem gegenüberliegenden Klemmkörper (22) ausgebildeter Raum zur Aufnahme des Fixierkörpers (20) in Richtung der Ausnehmung (16) sich verjüngend ausgebildet ist.

8. Vorrichtung nach einem der vorhergehenden Ansprüche, **dadurch gekennzeichnet, dass** zwischen einem in Richtung der Ausnehmung (16) zeigenden Ende (38) des Fixierkörpers (20) und einer Basis (28) der Ausnehmung (16) ein Freiraum (26) ausgebildet ist.

9. Vorrichtung nach einem der vorhergehenden Ansprüche, **dadurch gekennzeichnet, dass** der Fixierkörper (20) in Richtung der Ausnehmung (16) sich verjüngend ausgebildet ist.

10. Vorrichtung nach Anspruch 9, **dadurch gekennzeichnet, dass** der Fixierkörper (20) keil- oder stumpfkegelförmig ausgebildet ist.

11. Vorrichtung nach einem der vorhergehenden Ansprüche, **dadurch gekennzeichnet, dass** der Fixierkörper (20), das Dichtungsträgerelement (18), der Klemmkörper (22) sowie die stegartigen Verbindungen (24) einstückig ausgebildet sind.

12. Vorrichtung nach Anspruch 5, **dadurch gekennzeichnet, dass** der Fixierkörper (20), das Dichtungsträgerelement (18), der Klemmkörper (22), die stegartigen Verbindungen (24) sowie das als Labyrinthdichtung ausgebildete Dichtungselement (14) einstückig ausgebildet sind.

13. Verfahren zur Befestigung von Dichtungselementen (12, 14) in einer Ausnehmung (16) unter Verwendung einer Vorrichtung (10) gemäß einem der vorhergehenden Ansprüche, **dadurch gekennzeichnet, dass** das Verfahren folgende Schritte umfasst:
a) Einbringen der Vorrichtung (10) in die Ausnehmung (16);
b) Aufbringen einer Kraft in Richtung der Ausnehmung (16) auf den Fixierkörper (20), derart, dass ein Lösen der Verbindung zwischen dem Fixierkörper (20) und dem Dichtungsträgerelement (18) einerseits und zwischen dem Klemmkörper (22) und dem Fixierkörper (20) andererseits bewirkt wird; und
c) weiteres Aufbringen der Kraft auf den Fixierkörper (20) bis ein Kraftschluss zwischen dem Fixierkörper (20), dem Dichtungsträgerelement (18), dem Klemmkörper (22) und Seitenwänden der Ausnehmung (16) erfolgt.

14. Verfahren zur Herstellung einer Vorrichtung (10) nach einem der Ansprüche 1 bis 12, **dadurch gekennzeichnet, dass** die Vorrichtung (10) mittels eines generativen Herstellungsverfahrens hergestellt wird.

15. Verfahren nach Anspruch 14, **dadurch gekennzeichnet, dass** das generative Herstellungsverfahren ein selektives Laserschmelzverfahren oder ein selektives Lasersinterverfahren ist.

## Claims

1. A device for fastening seal elements (12, 14) in a recess (16), having at least one seal carrier element (18) comprising at least one seal element (12, 14), wherein at least one fixing body (20) is arranged between the seal carrier element (18) and the clamping body (22) associated with the seal carrier element (18), **characterized in that** the fixing body (20) is integrally connected to the seal carrier element (18) and the clamping body (22) via web-like connections (24), which are detachable by means of force action.

2. The device as claimed in claim 1, **characterized in that** the fixing body (20) is designed such that, in the event of a detachment of the connection between the fixing body (20) and the seal carrier element (18), on the one hand, and between the clamping body (22) and the fixing body (20), on the other hand, a friction lock occurs between the fixing body (20), the seal carrier element (18), the clamping body (22) and side walls of the recess (16).

3. The device as claimed in claim 1 or 2, **characterized in that** the seal carrier element (18) is designed as a housing for accommodating the seal element (12).

4. The device as claimed in claim 3, **characterized in that** the seal element (12) is designed as a brush seal.

5. The device as claimed in claim 1, **characterized in that** the seal carrier element (18) is designed as a base element of the seal element (14), wherein the seal element (14) is a labyrinth seal.

6. The device as claimed in any one of the preceding claims, **characterized in that** the web-like connections (24) are each formed protruding from the seal carrier element (18) and the corresponding opposing clamping body (22) while forming an angle pointing in the direction of the recess (16).

7. The device as claimed in any one of the preceding claims, **characterized in that** a space formed between the seal carrier element (18) and the opposing clamping body (22) for accommodating the fixing body (20) is designed as tapering in the direction of the recess (16).

8. The device as claimed in any one of the preceding claims, **characterized in that** a free space (26) is formed between an end (38) of the fixing body (20) pointing in the direction of the recess (16) and a base (28) of the recess (16).

9. The device as claimed in any one of the preceding claims, **characterized in that** the fixing body (20) is designed as tapering in the direction of the recess (16).

10. The device as claimed in claim 9, **characterized in that** the fixing body (20) is designed in the form of a wedge or truncated cone.

11. The device as claimed in any one of the preceding claims, **characterized in that** the fixing body (20), the seal carrier element (18), the clamping body (22), and the web-like connections (24) are integrally formed.

12. The device as claimed in claim 5, **characterized in that** the fixing body (20), the seal carrier element (18), the clamping body (22), the web-like connections (24), and the seal element (14), which is designed as a labyrinth seal, are integrally formed.

13. A method for fastening seal elements (12, 14) in a recess (16) while using a device (10) as claimed in any one of the preceding claims, **characterized in that** the method comprises the following steps:
a) introducing the device (10) into the recess (16);
b) applying a force in the direction of the recess (16) to the fixing body (20) such that detaching of the connection between the fixing body (20) and the seal carrier element (18), on the one hand, and between the clamping body (22) and the fixing body (20), on the other hand, is caused; and
c) furthermore applying the force to the fixing body (20) until a friction lock takes place between the fixing body (20), the seal carrier element (18), the clamping body (22), and side walls of the recess (16).

14. A method for producing a device (10) as claimed in any one of claims 1 to 12, **characterized in that** the device (10) is produced by means of a generative production method.

15. The method as claimed in claim 14, **characterized in that** the generative production method is a selective laser melting method or a selective laser sintering method.

## Revendications

1. Dispositif de fixation d'éléments d'étanchéité (12, 14) dans un évidement (16) comportant au moins un élément de support d'étanchéité (18) comprenant au moins un élément d'étanchéité (12, 14), dans lequel au moins un corps de fixation (20) est disposé entre l'élément de support d'étanchéité (18) et un corps de serrage (22) affecté à l'élément de support d'étanchéité (18), **caractérisé en ce que** le corps de fixation (20) est relié à l'élément de support d'étanchéité (18) et au corps de serrage (22) d'un seul tenant par des liaisons (24) de type traverses détachables sous l'action d'une force.

2. Dispositif selon la revendication 1, **caractérisé en ce que** le corps de fixation (20) est conçu de telle sorte que lors d'un détachement de la liaison entre le corps de fixation (20) et l'élément de support d'étanchéité (18) d'une part et entre le corps de serrage (22) et le corps de fixation (20) d'autre part, s'effectue une coopération fonctionnelle entre le corps de fixation (20), l'élément de support d'étanchéité (18), le corps de serrage (22) et les parois latérales de l'évidement (16).

3. Dispositif selon la revendication 1 ou 2, **caractérisé en ce que** l'élément de support d'étanchéité (18) est conçu comme un boîtier pour recevoir l'élément d'étanchéité (12).

4. Dispositif selon la revendication 3, **caractérisé en ce que** l'élément d'étanchéité (12) est conçu comme un joint à brosse.

5. Dispositif selon la revendication 1, **caractérisé en ce que** l'élément de support d'étanchéité (18) est conçu comme un élément de base de l'élément d'étanchéité (14), dans lequel l'élément d'étanchéité (14) est un joint à labyrinthe.

6. Dispositif selon l'une des revendications précédentes, **caractérisé en ce que** les liaisons de type traverses (24) de l'élément de support d'étanchéité (18) et le corps de serrage opposé correspondant (22) sont conçus respectivement en saillie en formant un angle dans la direction de l'évidement (16).

7. Dispositif selon l'une des revendications précédentes, **caractérisé en ce qu'**un espace formé entre l'élément de support d'étanchéité (18) et le corps de serrage opposé (22) est conçu en se rétrécissant pour recevoir le corps de fixation (20) dans la direction de l'évidement (16).

8. Dispositif selon l'une des revendications précédentes, **caractérisé en ce que**, entre une extrémité (38) orientée dans la direction de l'évidement (16) du corps de fixation (20) et une base (28) de l'évidement (16) est conçu un espace libre (26).

9. Dispositif selon l'une des revendications précédentes, **caractérisé en ce que** le corps de fixation (20) est conçu en se rétrécissant dans la direction de l'évidement (16).

10. Dispositif selon la revendication 9, **caractérisé en ce que** le corps de fixation (20) est de forme cunéiforme ou tronconique.

11. Dispositif selon l'une des revendications précédentes, **caractérisé en ce que** le corps de fixation (20), l'élément de support d'étanchéité (18), le corps de serrage (22) et les liaisons de type traverses (24) sont conçus d'un seul tenant.

12. Dispositif selon la revendication 5, **caractérisé en ce que** le corps de fixation (20), l'élément de support d'étanchéité (18), le corps de serrage (22), les liaisons de type traverses (24) ainsi que l'élément d'étanchéité conçu comme un joint à labyrinthe (14) sont conçus d'un seul tenant.

13. Procédé de fixation d'éléments d'étanchéité (12, 14) dans un évidement (16) en utilisant un dispositif (10) selon l'une des revendications précédentes, **caractérisé en ce que** le procédé comprend les étapes suivantes :
a) insertion du dispositif (10) dans l'évidement (16) ;
b) application d'une force dans la direction de l'évidement (16) sur le corps de fixation (20) de telle sorte qu'un détachement de la liaison entre le corps de fixation (20) et l'élément de support d'étanchéité (18) d'une part et entre le corps de serrage (22) et le corps de fixation (20) d'autre part ait lieu ; et
c) une nouvelle application de force sur le corps de fixation (20) jusqu'à ce que s'effectue une coopération fonctionnelle entre le corps de fixation (20), l'élément de support d'étanchéité (18), le corps de serrage (22) et les parois latérales de l'évidement (16).

14. Procédé de fabrication d'un dispositif (10) selon l'une des revendications 1 à 12, **caractérisé en ce que** le dispositif (10) est fabriqué au moyen d'un procédé de fabrication génératif.

15. Procédé selon la revendication 14, **caractérisé en ce que** le procédé de fabrication génératif est un procédé sélectif de fusion au laser ou un procédé sélectif de frittage au laser.
